# EUROPEAN PATENT SPECIFICATION

(11) **EP 1 468 102 B1**
(45) Date of publication and mention of the grant of the patent: **27.05.2009**
(21) Application number: 03700270.6
(22) Date of filing: 22.01.2003
(51) Int. Cl.: C12P 7/62, C08G 63/88

(54) **METHOD OF DRYING BIODEGRADABLE POLYMERS**
VERFAHREN ZUR TROCKNUNG VON BIOLOGISCH ABBAUBAREN POLYMEREN
PROCEDE DE SECHAGE DE POLYMERES BIODEGRADABLES

(30) Priority: 22.01.2002 US 349430 P
(43) Date of publication of application: 20.10.2004
(73) Proprietor: Biomatera Inc., Jonquière (Québec) G7X OE5 (CA)
(72) Inventor: BOILY, Sabin, Chambly, Québec J3L 5M6 (CA); GAUDET, Julie, Boucherville, Québec J4B 5B5 (CA); BLOUIN, Marco, Montréal, Québec H1X 2N6 (CA); MASARO, Laurent, Montréal, Québec H3T 1P5 (CA); LAPOINTE, Patrick, Montréal-Nord, Québec H1H 1H8 (CA)
(74) Representative: Hinterberg, Katherine
(86) International application number: PCT/CA2003/000071
(87) International publication number: WO 2003/062438

(56) References cited:
- EP-A- 0 403 820
- EP-A- 1 158 014
- CN-A- 1 231 297
- DE-A- 19 712 708
- US-A- 3 834 038
- US-A- 4 055 001
- US-A- 5 560 122
- US-A- 5 821 299
- US-A- 6 087 471
- DATABASE INSPEC/IEE [Online] THE INSTITUTION OF ELECTRICAL ENGINEERS, STEVENAGE, GB; Inspec No. 3214851, LIGHTSEY G. & AL: "Evaluation of microwave and radio-frequency drying in the acid hydrolysis of biomass" XP002235647 & LIGHTSEY G. & AL: "Evaluation of microwave and radio-frequency drying in the acid hydrolysis of biomass" JOURNAL OF MICROWAVE POWER AND RADIO-FREQUENCY DRYING IN THE ACID HYDROLYSIS OF BIOMASS, vol. 23, no. 1, 1988, pages 11-15,
- DATABASE WPI Section Ch, Week 200234 Derwent Publications Ltd., London, GB; Class B04, AN 2002-297802 XP002235648 & JP 2001 340095 A (CANON KK), 11 December 2001 (2001-12-11)
- ROUSSY G. & AL: "A chemical-physical model fro describing microwave paper drying" JOURNAL OF MICROWAVE POWER, vol. 19, no. 4, 1984, pages 243-250, XP009008130
- RYYNÄNEN S. & AL: "The dielectric properties of native starch solutions: a research note" JOURNAL OF MICROWAVE POWER AND ELECTROMAGNETIC ENERGY, vol. 31, no. 1, 1996, pages 50-53, XP009008127

## Description

### TECHNICAL FIELD

The present invention relates to a drying or solution concentrating process. In particular, it relates to a process for drying a polar solution of biodegradable polymer or biomass and a process for concentrating a polar solution comprising a biodegradable polymer or a biomass.

### BACKGROUND OF THE INVENTION

Biodegradable polymers such as polyhydroxyalkanoates (PHAs) are of great interest and have resulted in an interesting new source of commodity polymers. Until recently, interest has been focused on PHAs production because their physical properties are similar to those of polymers produced from petrochemical sources (polyethylene, polypropylene) and unlike petrochemical based polymers, PHAs are both biocompatible and biodegradable. The potential worldwide market for biodegradable and biocompatible polymers is enormous. Polyhydroxyalkanoate (PHA) is a chemical term for a specific class of polyesters family. PHAs are biopolymers that are generally produced intracellularly by many microorganisms as an energy storage compound. The most common PHA biopolymer is PHB (polyhydroxybutyrate). More than 90 different monomers can be combined within this family to give materials with extremely different interesting properties. PHAs have the advantage of being biodegradable and possess thermoplastic or elastomeric properties. PHAs can be found commercially in a variety of plastic articles, packaging (household products, personal care products and food packaging), paper coatings, medical implants and hygienic products (disposable diapers or paper).

The use of PHA biodegradable polymers will be a viable alternative to petrochemical based polymers especially if the production and the extraction of PHAs are performed at low cost. A process for recovering PHAs from a biological source material generally implies: providing biomass containing PHA, lysing of the bacterial cell, extracting the PHA from the cell, separating the PHA from the other components of the biological source material and recovering the PHA.

Some pre-treatments (used to weaken or to provoke lysis of cells) may require dried biomass. Drying is usually performed under vacuum, on a tray in a forced air tunnel, by spray drying or by freeze drying (lyophylization). Drying a cell suspension or PHA solution is an obligatory step that takes place at many other stages during the PHA production and extraction. Drying processes are generally required before the extraction of PHA from the biomass and after the recovery of the PHA from the PHA-enriched solvent.

U.S. Pat. No. 6, 087, 471 describes the extraction of PHA from the dry biomass with an effective PHA-poor solvent, wherein the dissolution step is performed at a temperature above the boiling point of the PHA-poor solvent and under pressure. The PHA-enriched solvent is separated from the residual insoluble biomass and then, the temperature of the PHA-enriched solvent is reduced, causing PHA precipitation. PHA precipitate is recovered by filtration. PHA in form of powder is obtained by drying in a vacuum oven overnight at 50°C.

U.S. Pat. No. 5, 821, 299 describes the recovery of the PHA from the dry biomass (vacuum dried, spray dried, freeze dried or dried on a tray at 30°C in a forced air tunnel) by treating the biomass with a PHA solvent and a marginal non-solvent for PHA. The insoluble biomass is removed, thereby leaving a solution of PHA and a marginal non-solvent for PHA. The PHA solvent is removed and a suspension of precipitated PHA in a marginal non-solvent is obtained. PHA in the form of powder is obtained by filtration and drying.

U.S. Pat. No. 6, 043, 063 describes a method for PHA extraction from dry biomass by dissolving PHA to produce PHA-enriched solvent and residual biomass materials, separating the residual biomass from the PHA-enriched solvent and recovering PHA polymer from the PHA-enriched solvent. The polymer is recovered by filtering, washing and drying in a vacuum oven overnight at 45-50°C.

Drying the biomass recovered after the fermentation step could also be an interesting alternative to assure the long term conservation of the biomass and to avoid microorganism proliferation. The importance of the drying during the production of PHA explains the need for a simple and economical process for drying PHA solutions or biomass from the fermentation step to reduce the production costs of PHA biodegradable polymers compared to synthetic petroleum based polymers.

Concentrating a cell suspension or a PHA biodegradable polymer solution is often required before each new chemical treatment (ex: pre-treatment of the biomass, PHA extraction with a solvent, washing with different kinds of chemical agents and enzymatic treatments) during the PHA production process. Concentrating a cell suspension or PHA solution is usually performed by centrifugation.

European patent number A-0,015,669 describes the concentration range (from 5 to 15% by weight biomass solids) that must be obtained rather after the concentration of the cell suspension by centrifugation. The cell suspension must be preferably concentrated by centrifugation prior to the extraction being processed (performed by combining a solvent with an aqueous suspension of the disrupted cells).

During the production of several kinds of biodegradable polymers, a drying or a concentrating step is required. For instance, polylactic acid (PLA) can be prepared by direct condensation of lactic acid or by ring-opening polymerisation of the cyclic lactide dimer.

U.S. Pat. No. 5, 142, 023 describes a process for continuous production of polylactide polymer from lactic acid comprising water or solvent removal in order to concentrate the lactic acid followed by polymerisation. The concentrating step is performed by evaporating a substantial portion of the aqueous medium.

It could also be very interesting or necessary to dry a biodegradable polymer before a thermoforming process to remove all traces of water or polar solvents. Thus, it would be highly recommended to provide a drying method that could be applied at any stage during the biodegradable polymer production process. The present invention relates to a drying or a solution concentrating process using radiation heating techniques (infrared light, radio-frequency, microwaves and electrical resistance used as generating heating source).

Microwave drying technique is an example of a radiation heating technique that is already commercially used for the production of synthetic non biodegradable polymers. In some polymer making processes, it is necessary to remove solvents and/or water from the polymer. U.S. Pat. No. 4, 055, 001 describes the use of microwave drying processes during the production of butyl rubber. Water and organic solvents are removed from non-polar materials by passing said materials through a pneumatic conveyor resonating cavity operating at a well defined microwave frequency. CN. Pat. No. 1, 231, 297 describes a method for drying a high molecular polymer colloid in microwave heating equipment. The microwave heating time is less than 10 minutes, the energy consumption is reduced and the production efficiency is increased.

Researchers from the LTEE (Laboratoire des technologies électrochimiques et des électrotechnologies d'Hydro-Québec, Québec, Canada) have studied radiation heating techniques (infrared light, radio-frequency, microwaves and electrical resistance as generating heating source) used for general drying applications. They found that radiation heating techniques reduce the greenhouse gases emission and increase the drying efficiency compared to convection or conduction heating techniques. Radiation heating techniques have been recognised as being an interesting alternative to conventional heating techniques.

By using radiation heating techniques instead of current drying processes (heat treatment, vacuum dried, spray dried, freeze dried, dried on a tray in a forced air tunnel or lyophylization), the time required to completely dry a sample, the infrastructure and the consumption of energy costs are considerably reduced. Radiation heating techniques are consequently a good alternative to conventional heating processes.

Polyhydroxyalkanoates belong to the family of polyesters. When they are thermoformed, polyesters are very sensitive to hydrolysis, resulting in the reduction of their molecular weight. Therefore, before the thermoforming process it is very important, even critical, to dry them in order to removed all traces of water (moistening percentage should be below 0.02%).

The Journal of Microwave Power and Electromagnetic Energy (1988), 23(1), 11-15 describes an evaluation of the possible use of microwave and radiofrequency drying as a pre-treatment step in the acid hydrolysis of corn stover.

DE-A-1971278 relates to a technique of drying polysaccharide by microwave which reduces the decrease of molecular weight.

In EP-A-1158014, the drying of microcapsules containing polyhydroxycarboxylic acid is indicated among other methods but no indication is given regarding the molecular degradation.

EP-A-0403820 relates to a fluidized bed processor such as a fluidized bed dryer, coster or agglomerator which are used for drying, coating and agglomerating operations and which utilize the application of microwave energy.

US-A-5560122 relates to a one-pot mixer/granulator/dryer constituting a one pot production apparatus. Drying is effected using a combination of contact, vacuum, flushing air and infrared drying.

In the Journal of Microwave Power (1984), 19(4), 243-250, the authors have studied the drying of cellulose particles under microwave irradiation.

In the Journal of Microwave Power and Electromagnetic Energy (1996), 31(1), 50-53, the dielectric properties of native starch solutions was measured.

It would be highly desirable to have a new method of drying for drying biopolymers without degradation thereof.

### SUMMARY OF THE INVENTION

One object of the present invention is to provide a process for drying or concentrating a biodegradable polymer solution or biomass containing the biodegradable polymer, said process comprising submitting the solution or biomass containing the polymer to microwaves for a period of time sufficient to reduce solvent concentration from the solution or biomass containing the biodegrable polymer in proportions of between about 0.0001% to 100%.

In accordance with the present invention there is provided a process for drying or concentrating a polyester that is selected from the group consisting of polyhydroxyalkanoate, polycaprolactone, polylactic acid, polyglycolic acid, poly(lactic-co-glycolic) acid, or a mixture or a copolymer thereof.

Microwaves utilized in the process of the present invention can be selected between about 915 to 2450 MHz, and produce between about 100 to 1500 Watts.

Another object of the present invention is to provide a process by which the drying or concentrating is performed with less than 15% degradation of a polymer in solution or biomass.

The solvent used to solubilize the polymers can be an aqueous medium, as water for example, or polar organic solvent that can be selected from the group consisting of alcohol, amine, amide, halogenous, cyano, aldehyde, acid, cetone, ester, thiol, and sulfoxide.

Also, the process of the invention may be performed to concentrate or dry a polyhydroxyalkanoate that can be selected from the group consisting of poly-3-hydroxybutyrate, poly-3-hydroxyvalerate, poly-3-hydroxypentanoate, poly-3-hydroxyhexanoate, poly-3-hydroxyheptanoate, poly-3-hydroxyoctanoate, poly-3-hydroxynonanoate, poly-3-hydroxydecanoate, poly-3-hydroxydodecanoate, poly-4-hydroxybutyrate, and medium chain length PHA, or a mixture or a copolymer thereof.

The process of the present invention allows for drying and/or concentrating a biopolymer or biodegradable polymer in a solution or in a biomass by inducing no or a low degree of degradation to the biopolymer. The degradation level may vary from 0 to 25%. Preferably the degradation level is between 0 to 10%, and most preferably between 0 to 2%.

For the purpose of the present invention the following terms are defined below.

The term "biopolymers" is intended to mean polymers obtained from natural and renewable sources.

The term "latex" as used herein is intended to mean a suspension of PHA granules and/or particles in water. The PHA granules can be either in their native state (amorphous), re-amorphized or re-suspended in water. The native PHA is defined as a granule of PHA, produced by bacterial fermentation, which was never precipitated, therefore its crystallisation degree remains close to or slightly higher than what it was in the bacteria.

The terms "granules" and/or "particles" as used herein are intended to mean spheroids shaped biopolymer segments.

The term "biomass" means the sources from which PHA is extracted. These sources include single-cell organisms such as bacteria or fungi and organisms such as plants. Biomass could be wild-type organisms or genetically manipulated species specifically designed for the production of a specific PHA. Such modified organisms are produced by incorporating the genetic information (derived from bacteria which naturally produce PHA) to produce one or more types of PHA.

The term "plants" as used herein is intended to mean any genetically engineered plant designed to produce PHA. Preferred plants include agricultural crops such as cereal grains, oilseeds and tuber plants; more preferably, avocado, barley, beets, broad bean, buckwheat, carrot, coconut, copra, corn (maize), cottonseed, gourd, lentil, lima bean, millet, mung bean, oat, oilpalm, pea, peanut, potato, pumpkin, rapeseed (e.g., canola), tobacco, wheat, and yam. Such genetically altered fruit-bearing plants include, but are not limited to, apple, apricot, banana, cantaloupe, cherry, grape, kumquat, lemon, lime, orange, papaya, peach, pear, pineapple, tangerine, tomato, and watermelon.

### BRIEF DESCRIPTION OF THE DRAWINGS

Fig. 1 illustrates drying of biomass with low microwave power level;
Fig. 2 illustrates drying PHBV latex with low microwave power level;
Fig. 3 illustrates drying PHBV latex with high microwave power level;
Fig. 4 illustrates unaltered biopolymer JG-B011 after 5 min. of microwaving at 50% power level;
Fig. 5 illustrates unaltered biopolymer JG-B011 after 2 min. of microwaving at 550 Watts;
Fig. 6 illustrates altered biomass after microwaving;
Fig. 7 illustrates the biomass microwaved during 1 min. at 1100 Watts;
Fig. 8 illustrates dried biomass after 2 min. microwaving at 1100 Watts;
Fig. 9 illustrates dried biomass after 1 min. microwaving at 550 Watts;
Fig. 10 illustrates dried biomass after 2 min. microwaving at 550 Watts; and
Fig. 11 illustrates dried biomass after 4 min. microwaving at 550 Watts.

### DETAILED DESCRIPTION OF THE PREFERRED EMBODIMENT

The present invention now will be described more fully hereinafter with reference to the accompanying drawings, in which preferred embodiments of the invention are shown. This invention, may, however, be embodied in many different forms and should not be construed as limited to the embodiments set forth herein; rather, these embodiments are provided so that this disclosure will be thorough and complete, and will fully convey the scope of the invention to those skilled in the art.

In accordance with the present invention, there is provided a new process for drying biopolymers and biomass. The biopolymers are provided from natural sources, or derived from a fermentation process.

In accordance with the present invention, there is provided a new process for concentrating biopolymer solutions and biomass. The biopolymers are provided from natural sources, or derived from a fermentation process.

The process of the invention relates to the utilisation of radiation heating techniques to dry or concentrate a biodegradable polymer or a biomass solution during its production processes. Radiation heating techniques may be used instead of conventional solution concentrating processes (centrifugation) or as a very attractive alternative to current drying processes (heat treatment, vacuum dried, spray dried, freeze dried or dried on a tray in a forced air tunnel). Illustrative of the types of biodegradable polymers which may be dried by the method of this invention are:
Biodegradable polymers comprising the following repeating unit: 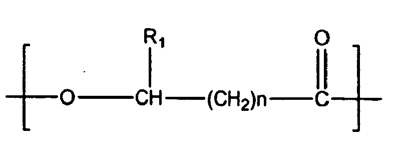 wherein n is an integer from 0 up to 9 and R₁ is H, alkyl or alkenyl. Alkyl and alkenyl side chains are preferably from C₁ up to C₂₀ carbon long and can contained heteroatoms. Biodegradable polymers can be homopolymers, with the same repeating monomer unit, and/or copolymers, with two different repeating monomer units. When biodegradable polymers are PHA polymers, they can be produced by plants or microbial organisms either naturally or through genetic engineering, or synthetically produced.

Biodegradable polymers comprising two different randomly repeating monomer units. The two randomly repeating units have a different structure comprised of the general following structure: 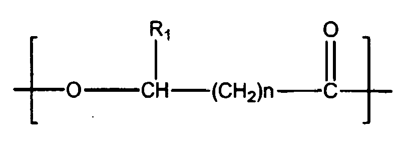 wherein n is 0 to 9 and R₁ is H, or a C₁ to C₂₀ chain.

According to another embodiment of the present invention, types of biodegradable polymers which may be dried or concentrated by the method of this invention are cellulose or modified cellulose biodegradable polymer, starch based biodegradable polymer, PVA (polyvinylalcohol), other polyesters such as PLA, PGA and PCL and biodegradable polymer..

Illustrative of the type of biomass which may be dried by the method of this invention are biomasses selected from the group consisting of organisms (plants, bacteria) natural or genetically modified.

The invention relates to a process for drying or concentrating a solution comprising any kind of biodegradable polymer that is usually produced by a process comprising at least one step of drying or concentrating the biodegradable polymer solution, wherein the solution comprises any kind of polar solvents. The invention also relates to a process for drying or concentrating a solution comprising more than one kind of biodegradable polymers.

The radiation drying can be performed with any kind of equipment employing radiation as a heating source. It has been found that the volatile content of biomass or biodegradable polymer solutions can be considerably reduced by using radiation drying. An example of a radiation heating technique is microwave drying. During the microwave drying process of biomass or biodegradable polymer solution, the sample is exposed to microwave radiations. Polar solvents and water respond to microwave energy, so they can be eliminated from the sample. Industrial microwave radiation frequencies currently available are 915 MHz and 2450 MHz. Some conditions may be varied during the drying process and a few examples of these are described below. Industrially, biodegradable polymer solution or biomass could be disposed on a tray, on a vibrating tray and dried or concentrated by a combination of some radiation techniques (infrared light, radio-frequency, microwaves and electrical resistance are used as generating heating sources). The thickness of the biodegradable polymer or biomass solution layer set on the tray may be adjusted to optimize the time and the efficiency of the drying process. Radiation heating techniques could also be used as a finishing drying process to remove the last remaining few percentage of moisture without overheating the sample. During the drying process, dry air could also be blown into the radiation heating equipment to decrease the drying time and to evacuate the gases (evaporated water and solvents).

Using radiation heating techniques instead of current drying processes (heat treatment, vacuum dried, spray dried, freeze dried, dried on a tray in a forced air tunnel or lyophylization), considerably reduces the time required to completely dry a sample. For instance, the minimum required time for a biomass lyophylization process is approximately 24 hours and the drying process (vacuum oven at 45-50°C) that takes place during the recovery of the PHA from a PHA-enriched solvent requires approximately 12 hours. Contrary to standard drying processes, radiation heating techniques allow the drying time to be reduced to a few minutes or hours, depending on the drying conditions.

This different approach for drying biodegradable polymer or biomass solution will considerably reduce the processing time for biodegradable polymer production. The high efficiency of radiation heating techniques to dry biodegradable polymer or biomass solution will allow a reduction of the biodegradable polymer production costs.

The present invention will be more readily understood by referring to the following examples which are given to illustrate the invention rather than to limit its scope.

### EXAMPLE I

### Drying biomass with low microwave power level (10%)

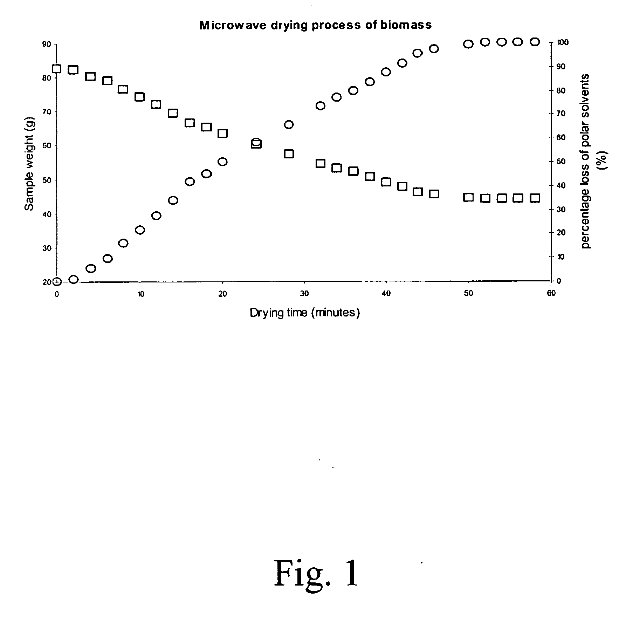

Biomass containing PHBV (93%hydroxybutyrate-7%hydroxyvalerate) was produced in our laboratories according to our protocol. A Sylvania microwave oven (SM81004, 1 cubic foot interior, 1600 W of consumption power and 1100 W of maximum microwave power) was used for the drying process. 82.2 g of biomass is placed in the microwave oven, dried during a short period of time (2 minutes) at 10% power level, removed from the microwave, mixed and weighted. These steps are repeated until a constant sample weight is obtained. Short periods of microwave exposure are required to avoid the overflowing of the solution. Mixing the biomass after each short period of microwave exposure provides a uniform drying of the sample. In these microwave conditions, 52 minutes are required to dry 82.2 g of the biomass which contains 46.5 % w/w of water (Fig. 1).

### EXAMPLE II

### Drying PHBV latex with low microwave power level (10%)

A latex containing PHBV (93%hydroxybutyrate-7%hydroxyvalerate) was used for the drying process. The latex contains 15% w/w of PHBV in water.

A Sylvania microwave oven (SM81004, 1 cubic foot interior, 1600 W of consumption power and 1100 W of maximum microwave power) was used for the drying process. 18.49 g of the PHBV latex is disposed in the microwave oven, dried during a short period of time (2 minutes) at 10% power level, removed from the microwave, mixed and weighted. These steps are repeated until a constant sample weight is obtained.

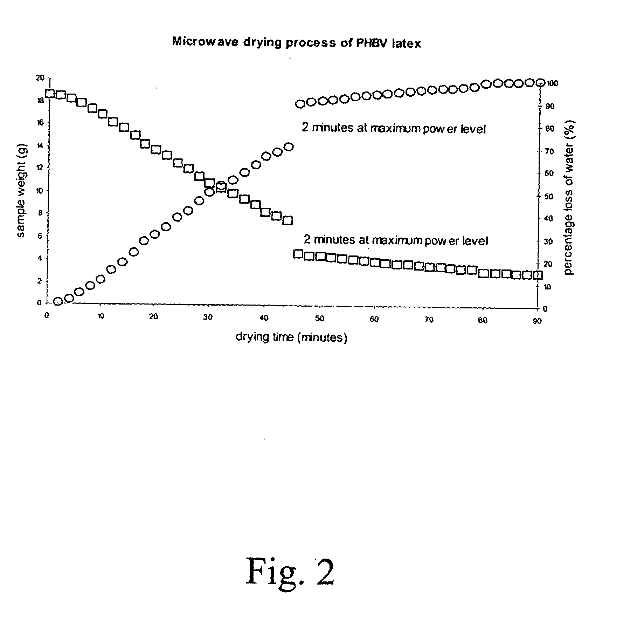

Short periods of microwave exposure are required to avoid the overflowing of the solution. Mixing the biomass after each short period of microwave exposure provides uniform drying of the sample. To validate the effect of the microwave power level on the efficiency of the drying process, the sample was submitted to a microwave exposure at the maximal microwave power level for two minutes. The high sample weight loss after 46 minutes of microwave drying is explained by a short microwave exposure of 2 minutes at the maximal power level instead of 10%. In these microwave conditions, 88 minutes are required to dry the PHBV latex (Fig. 2).

In order to verify that the microwave drying process does not modify the polymer properties, the PHBV polymer has been characterized before and after the drying process by techniques such as, thermogravimetric analysis (TGA), differential scanning calorimetry (DSC) and size exclusion chromatography (SEC). A comparison between the physico-chemical properties of the PHBV obtained after the microwave drying process and obtained after a speed vacuum drying process shows no difference.

### EXAMPLE III

### Drying PHBV latex with high microwave power level (50%)

A latex containing PHBV (93%hydroxybutyrate-7%hydroxyvalerate) was used for the drying process. The latex contains 15% w/w of PHBV in water.

A Sylvania microwave oven (SM81004, 1 cubic foot interior, 1600 W of consumption power and 1100 W of maximum microwave power) was used for the drying process. 23.09 g of the PHBV latex is disposed in the microwave oven, dried during a short period of time (30 seconds to 2 minutes) at 50% power level, removed from the microwave, mixed and weighted. When the microwave drying process is performed at a power level higher than 10%, the reduction of the microwave exposure time (minutes to seconds) is required to avoid overflowing of the solution. These steps are repeated until a constant sample weight is obtained. Mixing the biomass after each short period of microwave exposure provides a uniform drying of the sample. In these microwave conditions, 40 minutes are required to dry the PHBV latex.

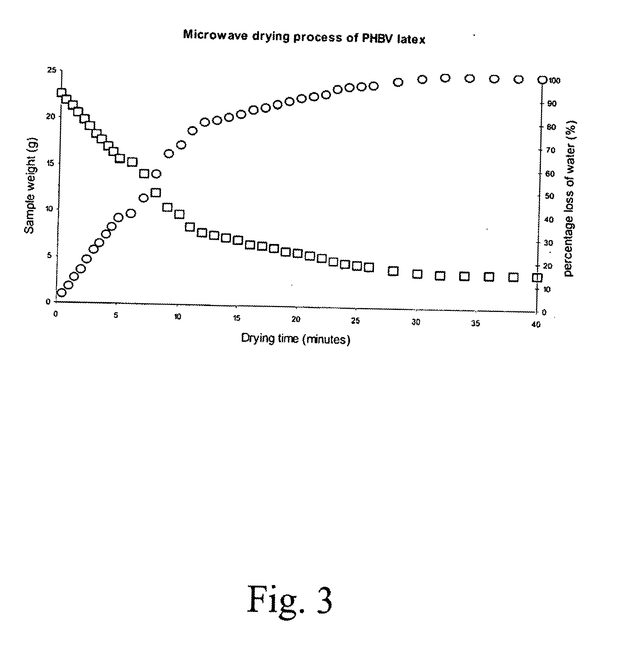

In order to verify that the microwave drying process does not modify the polymer properties, the PHBV polymer has been characterized before and after the drying process by techniques such as, thermogravimetric analysis (TGA), differential scanning calorimetry (DSC) and size exclusion chromatography (SEC). A comparison between the physico-chemical properties of the PHBV obtained after the microwave drying process and obtained after a speed vacuum drying process shows no difference (Fig. 3).

The invention relates to a process for drying or concentrating a solution comprising of any kind of biodegradable polymers that are usually produced by a process comprising of at least one step of drying the biodegradable polymer solution or concentrating the biodegradable polymer solution wherein the solution comprises any kind of polar solvents or mixtures or polar solvents. The invention also relates to a process for drying or concentrating a solution comprising of more than one kind of biodegradable polymers.

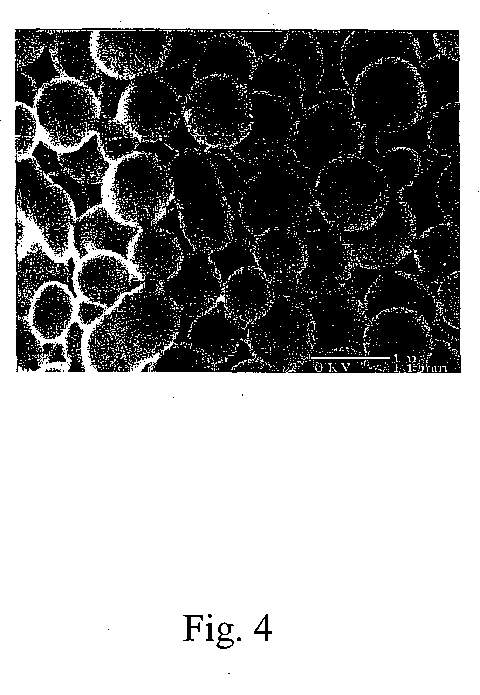

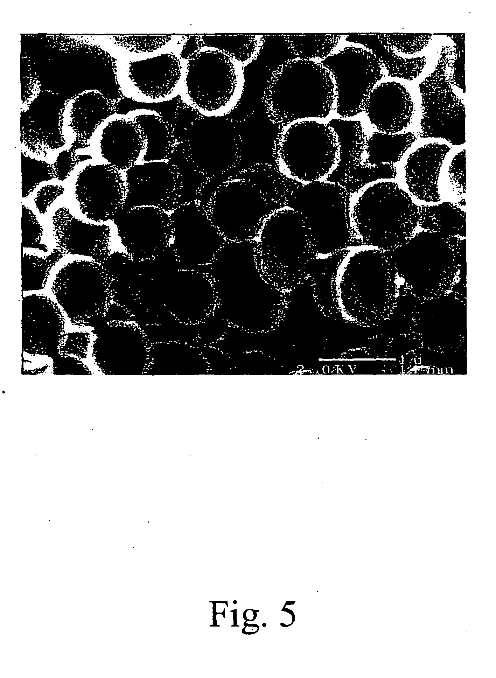

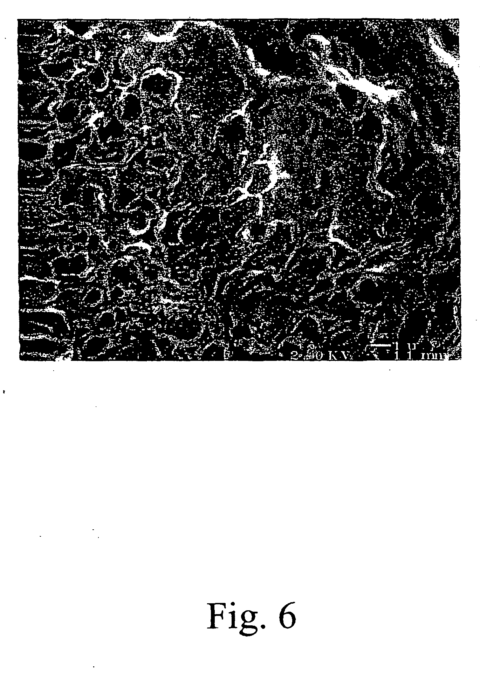

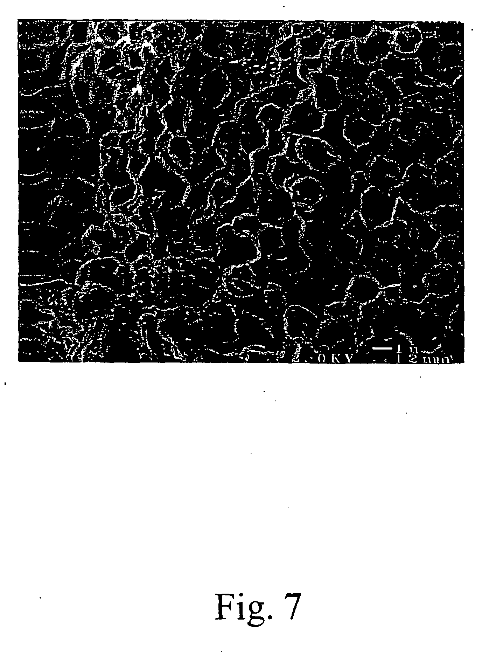

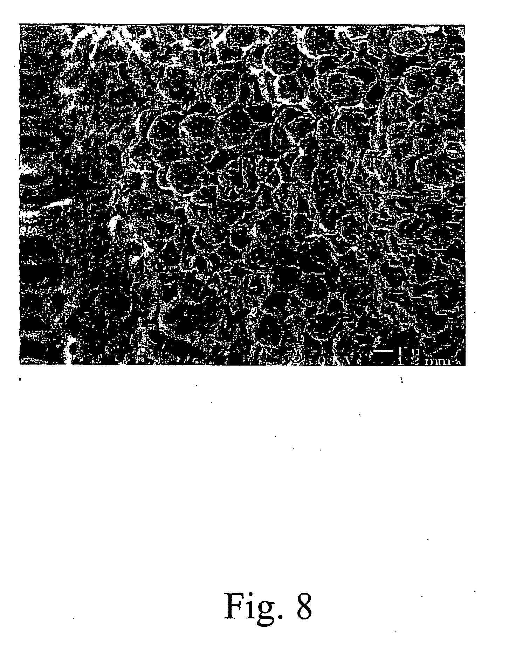

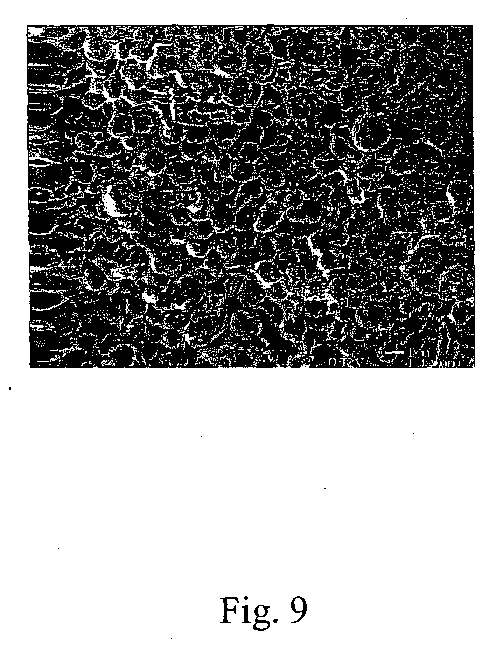

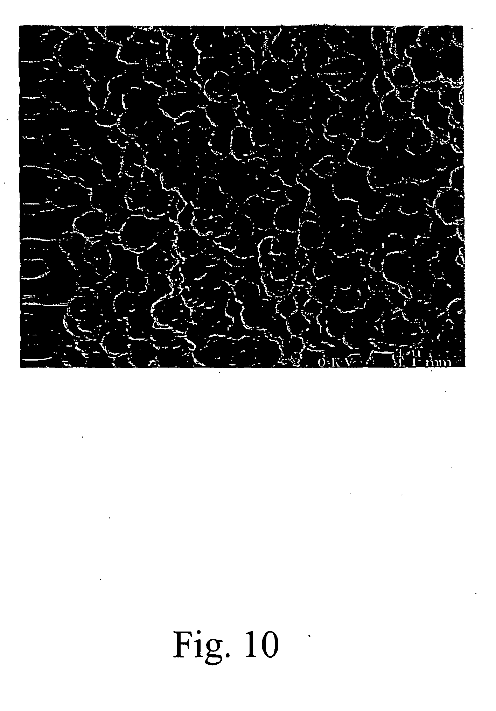

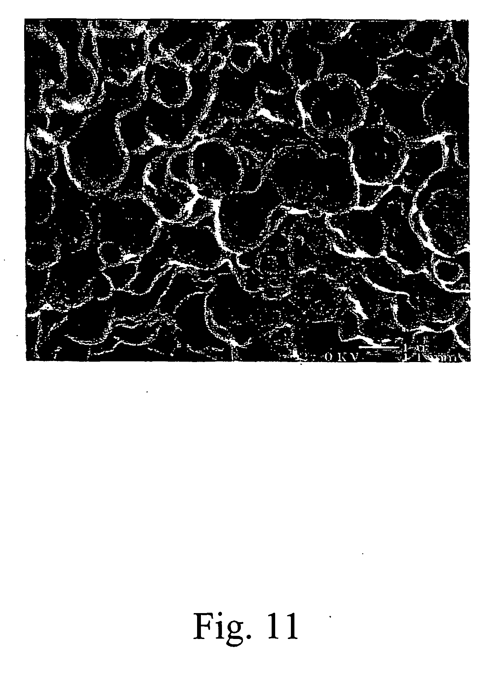

Appearance of a PHA derivative after microwaving under different conditions is shown in Figs. 4 to 11.

## Claims

1. A process for drying or concentrating with low or no degradation a biodegradable polymer in a solution or a biomass containing the biodegradable polymer, said process comprising submitting said solution or biomass to microwaves for a period of time sufficient to reduce solvent concentration from said solution or biomass containing the biodegradable polymer in proportions of between 0.0001% to 100%, wherein said biodegradable polymer is a polyester selected from the group consisting of polyhydroxyalkanoate, polycaprolactone, polylactic acid, polyglycolic acid, poly(lactic-co-glycolic) acid, or a mixture or a copolymer thereof.

2. A process of claim 1, wherein said polymer is synthetic or natural polymer.

3. The process of claim 1, wherein said microwaves are between about 915 to 2450 MHz.

4. The process of claim 1, wherein said microwaves produced are between about 100 to 1500 Watts.

5. The process of claim 1, wherein said drying or concentrating is performed with less than 25% degradation of said biodegradable polymer.

6. The process of claim 1, wherein said solvent is water or a polar organic solvent.

7. The process of claim 1, wherein said polyhydroxyalkanoate is selected from the group consisting of poly-3-hydroxybutyrate, poly-3-hydroxyvalerate, poly-3-hydroxypentanoate, poly-3-hydroxyhexanoate, poly-3-hydroxyheptanoate, poly-3-hydroxyoctanoate, poly-3-hydroxynonanoate, poly-3-hydroxydecanoate, poly-3-hydroxydodecanoate, poly-4-hydroxybutyrate, and a medium chain length PHA, or a mixture or a copolymer thereof.

8. The process of claim 6, wherein said polar organic solvent is selected from the group consisting of alcohol, amine, amide, halogenous, cyano, aldehyde, acid, cetone, ester, thiol, and sulfoxide.

## Patentansprüche

1. Verfahren zum abbauarmen oder abbaufreien Trocknen oder Aufkonzentrieren eines biologisch abbaubaren Polymers in einer Lösung oder einer Biomasse, die das biologisch abbaubare Polymer enthält, bei dem man die Lösung oder Biomasse über einen zur Verringerung der Lösungsmittelkonzentration der Lösung oder Biomasse, die das biologisch abbaubare Polymer enthält, in Anteilen zwischen 0,0001% und 100% ausreichenden Zeitraum Mikrowellen aussetzt, wobei es sich bei dem biologisch abbaubaren Polymer um einen Polyester aus der Gruppe bestehend aus Polyhdroxyalkanoat, Polycaprolacton, Polymilchsäure, Polyglykolsäure, Poly(milchsäure-co-glykolsäure) oder einer Mischung oder einem Copolymer davon handelt.

2. Verfahren nach Anspruch 1, bei dem es sich bei dem Polymer um ein synthetisches oder natürliches Polymer handelt.

3. Verfahren nach Anspruch 1, bei dem die Mikrowellen zwischen etwa 915 und 2450 MHz liegen.

4. Verfahren nach Anspruch 1, bei dem die erzeugten Mikrowellen zwischen etwa 100 und 1500 Watt liegen.

5. Verfahren nach Anspruch 1, bei dem man das Trocknen oder Aufkonzentrieren mit weniger als 25% Abbau des biologisch abbaubaren Polymers durchführt.

6. Verfahren nach Anspruch 1, bei dem es sich bei dem Lösungsmittel um Wasser oder ein polares organisches Lösungsmittel handelt.

7. Verfahren nach Anspruch 1, bei dem man das Polyhydroxyalkanoat aus der Gruppe bestehend aus Poly-3-hydroxybutyrat, Poly-3-hydroxyvalerat, Poly-3-hydroxypentanoat, Poly-3-hydroxyhexanoat, Poly-3-hydroxyheptanoat, Poly-3-hydroxyoctanoat, Poly-3-hydroxynonanoat, Poly-3-hydroxydecanoat, Poly-3-hydroxydodecanoat, Poly-4-hydroxybutyrat und einem PHA mit mittlerer Kettenlänge oder einer Mischung oder einem Copolymer davon auswählt.

8. Verfahren nach Anspruch 6, bei dem man das organische Lösungsmittel aus der Gruppe bestehend aus Alkohol, Amin, Amid, halogenhaltigem Lösungsmittel, Cyano, Aldehyd, Säure, Keton, Ester, Thiol und Sulfoxid auswählt.

## Revendications

1. Procédé de séchage ou concentration, avec peu ou pas de dégradation, d'un polymère biodégradable dans une solution ou une biomasse contenant le polymère biodégradable, ledit procédé comprenant l'étape consistant à soumettre ladite solution ou biomasse à des micro-ondes pendant une période de temps suffisante pour réduire la concentration en solvant de ladite solution ou biomasse contenant le polymère biodégradable en proportions comprises entre 0,0001 % à 100 %, dans lequel ledit polymère biodégradable est un polyester choisi parmi le groupe constitué d'un polyhydroxyalcanoate, d'une polycaprolactone, d'un acide polylactique, d'un acide polyglycolique, d'un acide poly(lactique-co-glycolique), ou d'un mélange ou d'un copolymère de ceux-ci.

2. Procédé selon la revendication 1, dans lequel ledit polymère est un polymère synthétique ou naturel.

3. Procédé selon la revendication 1, dans lequel lesdites micro-ondes sont comprises entre environ 915 et 2450 MHz.

4. Procédé selon la revendication 1, dans lequel lesdites micro-ondes produites sont comprises entre environ 100 et 1500 Watts.

5. Procédé selon la revendication 1, dans lequel ledit séchage ou ladite concentration est réalisé(e) avec moins de 25 % de dégradation dudit polymère biodégradable.

6. Procédé selon la revendication 1, dans lequel ledit solvant est l'eau ou un solvant organique polaire.

7. Procédé selon la revendication 1, dans lequel ledit polyhydroxyalcanoate est choisi parmi le groupe constitué d'un poly-3-hydroxybutyrate, d'un poly-3-hydroxyvalérate, d'un poly-3-hydroxypentanoate, d'un poly-3-hydroxyhexanoate, d'un poly-3-hydroxyheptanoate, d'un poly-3-hydroxyoctanoate, d'un poly-3-hydroxynonanoate, d'un poly-3-hydroxydécanoate, d'un poly-3-hydroxydodécanoate, d'un poly-4-hydroxybutyrate, et d'un PHA à longueur de chaîne moyenne, ou d'un mélange ou d'un copolymère de ceux-ci.

8. Procédé selon la revendication 6, dans lequel ledit solvant organique polaire est choisi parmi le groupe constitué d'un alcool, d'une amine, d'un amide, d'un composé halogéné, d'un cyano, d'un aldéhyde, d'un acide, d'une cétone, d'un ester, d'un thiol et d'un sulfoxyde.
